# EUROPEAN PATENT SPECIFICATION

(11) **EP 4 257 448 B1**
(45) Date of publication and mention of the grant of the patent: **17.09.2025**
(21) Application number: 21899501.7
(22) Date of filing: 06.04.2021
(51) Int. Cl.: B61L 15/00, B61H 15/00, B60T 17/22, B60B 17/00, B24B 49/16, B24B 37/02, B24B 5/46, B60T 13/66, B24B 5/36, B61K 9/12

(54) **RAILWAY VEHICLE, AND CONTROL METHOD AND SYSTEM FOR TREAD PROFILE OF RAILWAY VEHICLE**
SCHIENENFAHRZEUG UND STEUERUNGSVERFAHREN UND -SYSTEM FÜR EIN LAUFFLÄCHENPROFIL EINES SCHIENENFAHRZEUGS
VÉHICULE FERROVIAIRE ET PROCÉDÉ ET SYSTÈME DE COMMANDE POUR PROFILÉ DE BANDE DE ROULEMENT DE VÉHICULE FERROVIAIRE

(30) Priority: 02.12.2020 CN 202011393449
(43) Date of publication of application: 11.10.2023
(73) Proprietor: CRRC Qingdao Sifang Co., Ltd., Qingdao, Shandong 266111 (CN)
(72) Inventor: MA, Lijun, Qingdao, Shandong 266111 (CN); ZHANG, Zhenxian, Qingdao, Shandong 266111 (CN); FENG, Yonghua, Qingdao, Shandong 266111 (CN); ZHAO, Changlong, Qingdao, Shandong 266111 (CN); LIU, Shaoqing, Qingdao, Shandong 266111 (CN); LIANG, Haixiao, Qingdao, Shandong 266111 (CN); WEI, Jiaqi, Qingdao, Shandong 266111 (CN); ZHAO, Gumeng, Qingdao, Shandong 266111 (CN); LIANG, Junhai, Qingdao, Shandong 266111 (CN); ZHANG, Zhiyi, Qingdao, Shandong 266111 (CN); LIU, Yaping, Qingdao, Shandong 266111 (CN)
(74) Representative: Prinz & Partner mbB
(86) International application number: PCT/CN2021/085545
(87) International publication number: WO 2022/116457

(56) References cited:
- EP-B1- 2 020 356
- EP-B1- 3 181 428
- CN-A- 1 065 431
- CN-A- 100 999 219
- CN-A- 108 229 254
- CN-A- 109 108 727
- CN-A- 109 443 289
- CN-A- 110 775 094
- CN-A- 110 775 094
- CN-A- 110 803 190
- CN-A- 112 406 951
- DE-A1- 102012 025 295
- JP-A- 2001 158 355
- JP-A- 2002 005 794
- JP-A- H08 272 418
- US-A1- 2012 259 487
- US-A1- 2015 020 655
- US-B1- 10 562 105

## Description

This application claims priority to Chinese Patent Application No.202011393449.0, titled "RAILWAY VEHICLE, AND CONTROL METHOD AND SYSTEM FOR TREAD PROFILE OF RAILWAY VEHICLE ", filed on December 02, 2020 with the China National Intellectual Property Administration.

### FIELD

The present disclosure relates to the technical field of railway vehicles, and in particular, to a railway vehicle, a method and system for controlling a tread profile of a railway vehicle.

### BACKGROUND

With the increasing improvement of the running speed of railway vehicles, in order to ensure the operation stability during the entire service life of the railway vehicles, the equivalent taper threshold range of the tread is narrowed from (0.04-0.3) to (0.04-0.20), and the wheel lathing cycle is reduced from 250,000 kilometers to 150,000 kilometers, thus, the service life of the wheels is reduced by 40%.

JP 2001-158355A describes a railroad wheel shape correcting device. When the wheel is in a certain rotary angle position (as sensed by a rotary angle sensor) and an acceleration (as sensed by an acceleration sensor) not smaller than a predetermined value is generated in synchronism, a control device for the railroad wheel shape correcting device determines that there is a flat tire at that position. The control device then actuates a cylinder to press a correcting element against the tread of the wheel under high pressure. When the value sensed by the acceleration sensor becomes smaller, the control device stops the operation of the cylinder and returns to a normal actuation mode for the correcting element.

EP 3181428B1 describes a sensor signal processing system and method. The system includes one or more sensors that sense vibrations of a vehicle and one or more processors; a controller that can determine a speed of the vehicle and determine whether the vibrations occurring at one or more frequencies of interest (that are based on the speed of the vehicle) indicate damage to a propulsion system of the vehicle. The one or more processors and the controller optionally may determine a hunting frequency of a wheel and axle set and/or a lateral acceleration of the wheel and axle set from the vibrations. The one or more processors and the controller can determine a conicity of a wheel in the wheel and axle set based on the hunting frequency and/or the lateral acceleration that is determined.

US 2012259487A1 describes a method for monitoring the state of a bogie of a railway vehicle comprising at least one wheel set. A method for monitoring the state of a bogie of a railway vehicle having at least one wheel set, wherein the wheels of the wheel set are rigidly connected by an axle and have an approximately conical wheel profile, and signals corresponding to a sinusoidal run of the wheel set of the bogie based on the conical wheel profile of the wheels are filtered out of signals provided by sensors disposed on the bogie. The frequency of the sinusoidal run is determined relative to boundary conditions, such as the prevailing vehicle speed, and compared to a save value or range of values for the frequency of the sinusoidal run typical for the prevailing boundary conditions, wherein the deviation of the measured frequency from the saved value or range of values for the frequency is monitored.

EP 2020356B1 describes a vibration suppression device for railway vehicle. The vibration suppression device that suppresses vibration in a railway vehicle includes a damper having a variable damping force, which extends and compresses in accordance with lateral vibration of a vehicle body relative to a bogie, first control means that control the damping force of the damper using sky-hook semi-active control in order to suppress the lateral vibration of the vehicle body, vertical direction acceleration detecting means that detect acceleration in a vertical direction of the vehicle body, determining means that determine whether or not lateral vibration has occurred in the bogie on the basis of the acceleration detected by the vertical direction acceleration detecting means, second control means that cause the damper to operate so as to suppress the lateral vibration of the bogie, and switching control means that switch from the first control means to the second control means when lateral vibration is determined to have occurred in the bogie.

JP 2002-005794A describes a method and device for detecting of repair and replacement time, and a method and device for detecting of abnormality. Vibration is measured with various types of vibration accelerometers, obtained measured values are sent to a controller, the received measured values are preprocessed in the controller, and when the amplitude and/or frequency of the preprocessed data are/is decided as exceeding the previously set threshold, 1 is added to a variable Nn (n=1-5) indicating the number of times exceeding the threshold, whether the variable Nn exceeds the threshold of the number of times NOn or not is decided, and when the variable Nn is decided as exceeding the threshold of the number of times, an abnormal signal is outputted to a vehicle monitor as the analysis result of the detection of the repair and replacement time or as the analysis result of the detection of abnormality.

DE 102012025295A1 describes that an onboard profile correction machine has slides which are moved by electric motors or a hydraulic system which receives the control information from a control unit. The machine carries a wheel flange and a bearing surface of a railway wheel during the train run with a geometrically undefined cutting material to generate a desired taper or equivalent conicity, so that the running characteristics, particularly the sinusoidal running of the rail vehicle, are improved.

CN 110775094A describes a train tread onboard shaping method, and belongs to the field of rail vehicle wheel shaping methods. The method comprises the following steps that vehicle-mounted tread shaping devices with grinding functions are additionally arranged near all wheels of a train for polishing and shaping wheel treads in the train running process, the train running state is divided into a common braking state and a high-speed steady-state running state, and specific corresponding grinding control periods and methods under different vehicle running states are specifically provided.

CN 109108727A describes a vehicle wheel economic turning repair method and device and a computer readable storage medium. A vibration acceleration signal of a target vehicle wheel is obtained; and the change condition of the vibration acceleration signal can reflect the fault degree of the vehicle wheel. The vibration acceleration signal is processed, and a tread fault turning repair value of the target vehicle wheel can be obtained; the obtained flange thickness value reflects the abrasion situation of the flange of the target wheel, wherein the flange thickness value belongs to axial thicknesses, the turning repair total amount which is finally confirmed belongs to radial thicknesses, and therefore the radial thickness value which can be calculated according to the setflange rated thickness value and the set flange abrasion ratio value and correspond to the flange thickness value is the flange turning repair value; and according to the tread fault turning repair value and the flange turning repair value, the turning repair total amount of the target vehicle wheel can be determined. By calculating the turning repair total amount, the cutting amount of the targetvehicle wheel can be precisely controlled, and the turning repair efficiency and the turning repair economical efficiency of the vehicle wheel can be improved.

Therefore, it is still an urgent technical problem to be solved for those skilled in the art to provide a solution to extend the wheel lathing cycle.

### SUMMARY

The purpose of the present disclosure is to provide a railway vehicle, a method and system for controlling a tread profile of a railway vehicle, and the method for controlling a tread profile of a railway vehicle can extend the offline wheel lathing cycle.

In order to solve the above technical problems, a method for controlling a tread profile of a railway vehicle is provided according to the present disclosure. The railway vehicle includes a bogie, the bogie is connected to a wheel set, and the wheel set is provided with a tread modification device. The method includes: step S1, obtaining a lateral acceleration signal of the wheel set; step S2, determining whether a first number of continuous peak values is greater than or equal to a first set value present in the lateral acceleration signal, and performing step S3 on determining that a first number of continuous peak values is greater than or equal to the first set value present in the lateral acceleration signal; step S3, controlling a tread modification device of a corresponding wheel set to enter a modification mode; step S4, determining whether a first action condition is satisfied, and performing step S5 on determining that the first action condition is satisfied; step S5, controlling the tread modification device to perform an online repair according to condition on a tread profile of a wheel of the corresponding wheel set; step S6, determining whether a second number of continuous peak values is less than or equal to a second set value present in the lateral acceleration signal, and performing step S7 on determining that the second number of continuous peak values is less than or equal to a second set value present in the lateral acceleration signal, where the second set value is less than the first set value; and step S7, controlling the tread modification device of the corresponding wheel set to exit the modification mode. Between step S5 and step S6, the method further includes: step S510, obtaining an execution time of the online repair according to condition; and step S511, determining whether the execution time is greater than or equal to a first set time, and performing step S6 on determining that the execution time is greater than or equal to the first set time.

According to the present disclosure, the lateral acceleration signal is used as the determination condition. If the first number of continuous peak values greater than or equal to a first set value are detected in the lateral acceleration signal, it is determined that the tread profile of the wheel of the railway vehicle is no longer matching with the rail soundly. In this case, the tread modification device can enter the modification mode. When the first action condition is satisfied, the wheel of the corresponding wheel set can be repaired online until there is a second number of continuous peak values less than or equal to a second set value in the lateral acceleration signal, so as to ensure a sound match between the wheels of the railway vehicle and the rail, thereby ensuring the stability of the operation process of the railway vehicle.

Since the wheel may be online repaired according to condition to realize real-time repair, the offline lathing cycle of the wheel can be extended greatly. It has been verified by experiments that the offline lathing cycle of the wheels can be extended by 2-3 times after applying the above method provided by the present disclosure, which can lower the operating costs of railway vehicles significantly.

Optionally, two lateral acceleration sensors are provided at a front and rear end of the bogie respectively, the bogie includes two wheel sets, and the two lateral acceleration sensors correspond one-to-one with the two wheel sets. Step S1 further includes: obtaining a lateral acceleration signal measured by a lateral acceleration sensor corresponding to the wheel set.

Optionally, the first set time is 110 hours to 130 hours.

Optionally, between the step S1 and the step S2, the method further includes: step S11, filtering the lateral acceleration signal in a specific frequency range. The lateral acceleration signals in step S2 and step S6 are the filtered lateral acceleration signals.

Optionally, the specific frequency range is 2Hz to 10Hz.

Optionally, the first action condition is that a running speed of the railway vehicle is greater than or equal to a set vehicle speed, the online repair according to condition is an intermittent operation modification, and an interval between two adjacent operation modifications is a second set time.

Optionally, the tread modification device includes a modification block, and the operation modification includes: step S520, controlling the modification block to contact a tread of the wheel with a first set pressure for a third set time; step S521, controlling the modification block to disengage from the tread of the wheel for a fourth set time; and step S522, repeating the step S320 and the step S321 for several times.

Optionally, the set vehicle speed is 75km/h to 85km/h; and/or the second set time is 30 minutes to 40 minutes; and/or the first set pressure is 0.44MPa to 0.54MPa; and/or the third set time is 25s to 35s; and/or the fourth set time is 25s to 35s.

Optionally, the method further includes: step S8, determining, determining, when the tread modification device is in a status of a non-online repair according to condition, whether a second action condition is satisfied; and step S9, controlling the tread modification device to enter a viscosity-increasing mode.

Optionally, the second action condition is braking, wheel slipping or wheel idling; and/or the tread modification device includes a modification block, and the step S9 includes: controlling the modification block to contact the tread of the wheel with a second set pressure.

A system for controlling a tread profile of a railway vehicle is provided according to the present disclosure. The railway vehicle includes a bogie, the bogie is connected to wheel sets, and the system includes a tread modification device provided for the wheel set. The system further includes a controller and a lateral acceleration sensor being configured to detect a lateral acceleration signal of the wheel set. The controller is configured to: control a tread modification device of a corresponding wheel set to enter a modification mode in a case that a first number of continuous peak values is determined to be greater than or equal to a first set value present in the lateral acceleration signal, and control the tread modification device to perform an online repair according to condition on a tread profile of a wheel of the corresponding wheel set in a case that it is determined that the first action condition is satisfied. The controller is further configured to control the tread modification device of the corresponding wheel set to exit the modification mode in a case that a second number of continuous peak values is determined to be less than or equal to a second set value present in the lateral acceleration signal, where the second set value is less than the first set value. The system further includes a timer signally connected to the controller. Between the tread modification device being controlled to perform the online repair according to condition, and the second number of continuous peak values being determined to be less than or equal to the second set value present in the lateral acceleration signal, the timer is configured to detect an execution time of the online repair according to condition; and the controller is configured to determine whether the execution time is greater than or equal to a first set time, and determine whether the second number of continuous peak values is less than or equal to the second set value present in the lateral acceleration signal in a case that the execution time is greater than or equal to the first set time.

Since the above method for controlling a tread profile of a railway vehicle already has the above-mentioned technical effects, the system corresponds to the method should also have similar technical effects, which will not be repeated here.

Optionally, the bogie includes two wheel sets, two lateral acceleration sensors are provided at a front and rear end of the bogie respectively, and the two lateral acceleration sensors correspond one-to-one with the two wheel sets.

Optionally, the first set time is 110 hours to 130 hours.

Optionally, the system further includes a processor. The processor is signally connected to the controller and the lateral acceleration sensor, and is configured to filter a lateral acceleration signal measured by the lateral acceleration sensor in a specific frequency range, and transmit the filtered lateral acceleration signal to the controller.

Optionally, the first action condition is that a running speed of the railway vehicle is greater than or equal to a set vehicle speed, the online repair according to condition is an intermittent operation modification, and an interval between two adjacent operation modifications is a second set time.

Optionally, the tread modification device includes a modification block. The modification block is configured to perform pressing and releasing actions repeatedly during the operation modification; and the pressing action includes that the modification block contacts a tread of the wheel with a first set pressure for a third set time, and the releasing action includes that the modification block disengages from the tread of the wheel for a fourth set time.

Optionally, the controller is further configured to enter a viscosity-increasing mode in a case that the tread modification device is in a status of a non-online repair according to condition and a second action condition is satisfied.

Optionally, the second action condition is braking, wheel slipping or wheel idling; and/or the tread modification device includes a modification block, and the modification block is configure to contact the tread of the wheel with a second set pressure in the viscosity-increasing mode.

A railway vehicle is provided according to the present disclosure. The railway vehicle includes the above system for controlling a tread profile of a railway vehicle.

Since the above system for controlling tread profiles of a railway vehicle already has the above technical effects, the railway vehicle with such system should also have similar technical effects, which will not be repeated here.

### BRIEF DESCRIPTION OF THE DRAWINGS

Figure 1 is a schematic flow chart of a method for controlling a tread profile of a railway vehicle according to an embodiment of the present disclosure;
Figure 2 is a schematic flow chart of an online repair according to condition; and
Figure 3 is a schematic structural diagram of a system for controlling a tread profile of a railway vehicle according to an embodiment of the present disclosure.

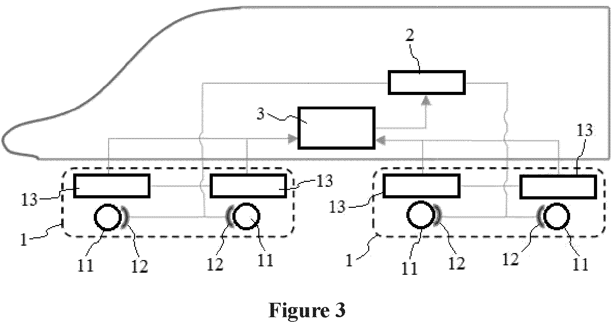

The reference number in Figure 3 are illustrated as follows:

| | |
|---|---|
| 1 Bogie; | 2 Controller; |
| 3 Processor; | 11 Wheel; |
| 12 Tread modification device; | 13 Lateral acceleration sensor. |

### DETAILED DESCRIPTION OF EMBODIMENTS

In order to enable those skilled in the art to better understand the technical solutions of the present disclosure, the present disclosure will be further described in detail below in conjunction with the accompanying drawings and specific embodiments.

The term "several" mentioned in the present disclosure refers to multiple with uncertain quantities, usually two or more. When "several" is used to represent the number of certain components, it does not indicate the mutual relationship between these components in terms of quantity.

The words such as "first" and "second" mentioned in the present disclosure are only for the convenience of describing two or more structures or components with the same or similar structure and/or function, which do not represent a special limit to any order and/or importance.

Hereinafter, the running direction of the railway vehicle is taken as the front-rear direction, and in the running plane of the railway vehicle, the direction that is vertical to the front-rear direction is taken as the lateral direction.

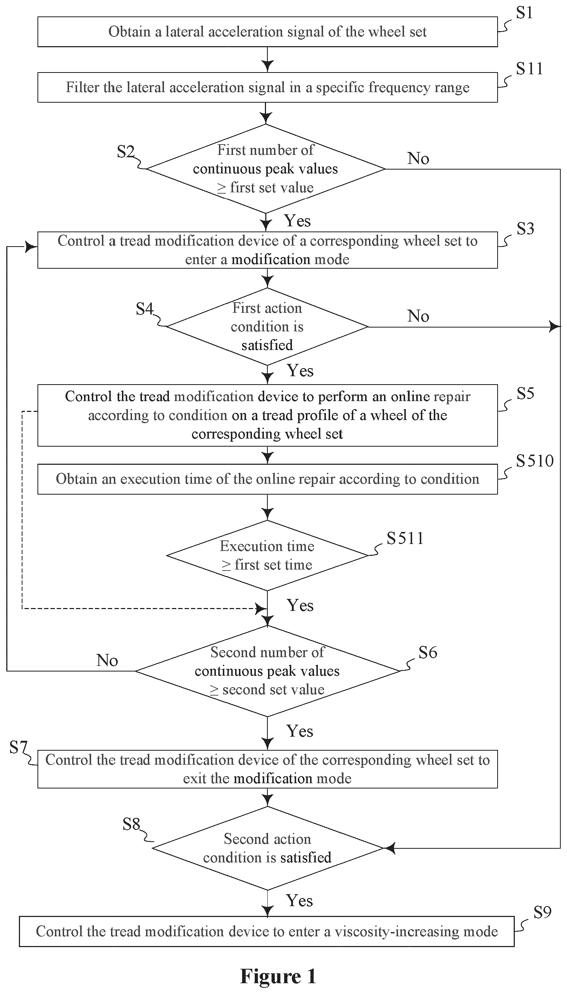

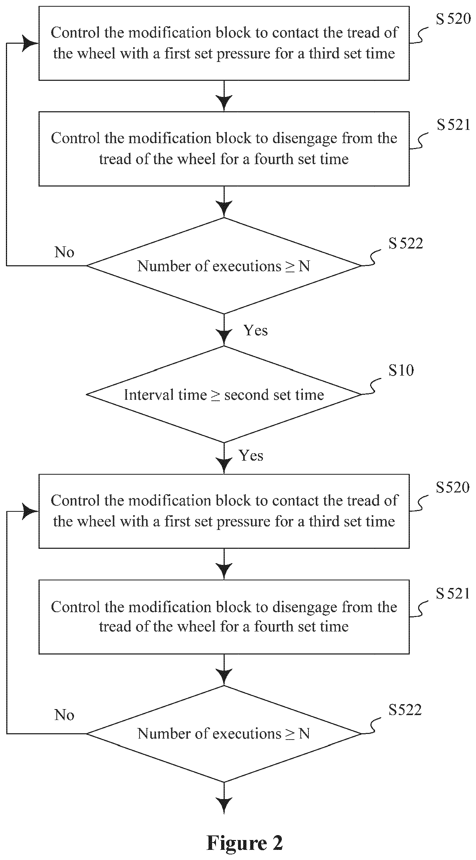

Referring to Figures 1 to 3, Figure 1 is a schematic flow chart of a method for controlling a tread profile of a railway vehicle according to an embodiment of the present disclosure; Figure 2 is a schematic flow chart of an online repair according to condition; and Figure 3 is a schematic structural diagram of a system for controlling a tread profile of a railway vehicle according to an embodiment of the present disclosure.

### Embodiment one

A railway vehicle generally includes several carriages connected in sequence. Each carriage includes a vehicle body and a bogie. Each bogie is equipped with two wheel sets, and each wheel set includes a wheel axle and two wheels 11. In practical applications, the tread profile of the wheel 11 should be adapted to the rail to ensure good contact between the wheel 11 and the rail, thereby ensuring the running stability of the railway vehicle.

However, as the service time of the railway vehicle is increasing, the wear and tear of the wheel 11 is getting worse, and the compatibility between the wheel 11 and the rail continues to decrease. For this problem, the commonly used processing method in the conventional technology is generally to perform offline lathing on the wheel 11 to improve the equivalent taper of the tread of the wheel 11. However, as mentioned in the background, the stability of railway vehicles is negatively correlated with the running speed. As the running speed is increasing, the equivalent taper threshold range of the tread is narrowed from (0.04-0.3) to (0.04-0.20), the and the wheel lathing cycle of the wheel is reduced from 250,000 kilometers to 150,000 kilometers, thus, the service life of the wheel is reduced by 40%, which has significantly increased the usage cost of the wheel in its entire life cycle.

In view of this, a method for controlling a tread profile of a railway vehicle is provided according to an embodiment of the present disclosure, which can perform an online repair according to condition on the wheel 11, achieving automatic repair of the tread profile during the operation of the railway vehicle, thereby breaking through the fixed lathing cycle of 150,000 kilometers (or 250,000 kilometers), and significantly reduce the operating costs of railway vehicles.

In an embodiment, as shown in Figure 1, the method includes the following steps.

In step S1, a lateral acceleration signal of the wheel set is obtained. The lateral acceleration signal is not an independent scatter value, but a sine (cosine) wave like signal composed of a series of scatter points.

In step S2, whether a first number of continuous peak values greater than or equal to a first set value present in the lateral acceleration signal is determined, and if yes, step S3 is performed. The peak values herein are absolute values, including both the peak value and the valley value.

In step S3, a tread modification device 12 of a corresponding wheel set is controlled to enter a modification mode. The corresponding wheel set herein refers to the wheel set corresponding to the lateral acceleration signal obtained in step S1.

In step S4, whether a first action condition is satisfied is determined, and if yes, step S5 is performed.

In step S5, the tread modification device 12 is controlled to perform an online repair according to condition on a tread profile of a wheel 11 of the corresponding wheel set.

In step S6, whether a second number of continuous peak values less than or equal to a second set value present in the lateral acceleration signal is determined, and if yes, step S7 is performed. The second set value is less than the first set value.

In step S7, the tread modification device 12 of the corresponding wheel set is controlled to exit the modification mode.

According to research, it has been found that the stability of the railway vehicle during operation is reflected in the lateral vibration of the wheel set (bogie 1). Therefore, according to the embodiment of the present disclosure, the lateral acceleration signal is selected as the determination condition. If the first number of continuous peak values greater than or equal to a first set value are detected in the lateral acceleration signal, it is determined that the tread profile of the wheel 11 of the railway vehicle is no longer matching with the rail soundly. In this case, the tread modification device 12 can enter the modification mode. When the first action condition is satisfied, the wheel 11 of the corresponding wheel set can be repaired online until there is a second number of continuous peak values less than or equal to a second set value in the lateral acceleration signal, so as to ensure a sound match between the wheels of the railway vehicle and the rail, thereby ensuring the stability of the operation process of the railway vehicle.

Since the wheel 11 may be online repaired according to condition to realize real-time repair, the offline lathing cycle of the wheel 11 can be extended greatly. It has been verified by experiments that the offline lathing cycle of the wheel 11 can be extended by 2-3 times after applying the above method provided by the present disclosure, which can lower the operating costs of railway vehicles significantly.

The component used to detect the lateral acceleration signal of the wheel set may be a lateral acceleration sensor 13, which may be arranged directly on the wheel set or at other positions, as long as the detected signal can reflect the change of the lateral acceleration of the wheel set.

In an exemplary embodiment, lateral acceleration sensors 13 are provided at the front and rear end of the bogie 1. The two lateral acceleration sensors 13 may correspond one-to-one with the two wheel sets. The correspondence relationship herein is the position correspondence. From the perspective of Figure 3, that is, the front lateral acceleration sensor 13 corresponds to the front wheel set, and the rear lateral acceleration sensor 13 corresponds to the rear wheel set.

Applied to step S1, step S3, step S5 and step S7, assuming that the lateral acceleration signal obtained in step S1 is provided by the lateral acceleration sensor located at the front end of the bogie 1, the corresponding wheel set refers to the wheel set located at the front end of the bogie 1. The two wheels 11 included in the wheel set are all provided with tread modification devices 12. The two tread modification devices 12 both enter the modification mode in step S3, both perform the online repair according to condition in step S5, and both exit the modification mode in step S7.

It should be noted that the above specific values of the first set value and the second set value are related to the installation position of the lateral acceleration sensor in the lateral direction of the bogie 1. In an exemplary embodiment, the lateral acceleration sensors at the front and rear of the bogie 1 may be located on both lateral sides of the bogie 1, that is, the two lateral acceleration sensors may be arranged diagonally. In this case, the first set value may be 5.5m/s² to 6.5m/s², for example, it may be 6m/s²; the second set value may be 3.5m/s² to 4.5m/s², for example, it may be 4m/s². The first quantity and the second quantity may be set as required, in an exemplary embodiment, both the first number and the second number may be 9-11, for example, both may be 10.

During the actual operation of the railway vehicle, the quality of the rails in different road sections is different. It is possible that during the operation of the railway vehicle on a first road section, the first number of continuous peak values greater than or equal to the first set value present in the lateral acceleration signal, while during the operation on an adjacent second road section, the lateral acceleration signal directly jumps to the second number of continuous peak values less than or equal to the second set value, which will result in the situation where the tread modification device 12 enters the modification mode and immediately exits. In this scenario, it actually does not achieve the purpose of repairing the wheel 11. When the railway vehicle passes the above first road section again, the first number of continuous peak values greater than or equal to the first set point may present in the lateral acceleration signal again.

In view of this, between step S5 and step S6, the method provided by the present disclosure includes: step S510, an execution time of the online repair according to condition is obtained; and step S511, whether the execution time is greater than or equal to the first set time is determined, and if yes, step S6 is performed.

In this way, before determining whether there is a second number of continuous peak values less than or equal to the second set value in the lateral acceleration signal, the execution time of the online repair according to condition is also controlled to ensure that the execution time can be greater than or equal to the first set time. Then, in conjunction with the determination condition in step S6, it can better ensure that the railway vehicle can meet the condition that there is a second number of continuous peak values less than or equal to a second set value in the lateral acceleration signal on different road sections, which can not only ensure the stability of the railway vehicle when operating on different road sections, but also facilitate the stability of control process.

Here, the specific value of the first set time is not limit in the embodiment of the present disclosure, which is actually related to the specific form of the online repair according to condition. In an exemplary embodiment, the above first set time may be 110 hours to 130 hours, for example, may be 120 hours.

As mentioned above, when the tread modification device 12 enters the modification mode, it does not mean that the wheel 11 is about to be modified, it also needs to meet the first action condition. It can be understood that the modification of the tread profile of wheel 11 by the tread modification device 12 is a grinding operation that requires the wheel 11 to maintain a certain speed. Therefore, the above first action condition may refer to the condition of the running speed of the railway vehicle. Specifically, in the embodiment of the present disclosure, the above first action condition may be that the running speed of the railway vehicle is greater than or equal to a set vehicle speed. The value of the set vehicle speed is not limited, which can be determined according to the actual situation. In an exemplary embodiment, the set vehicle speed may be 75km/h to 85km/h, for example, 80km/h.

In a case that the first action condition is satisfied, the tread modification device 12 may perform an online repair according to condition on the wheel 11, and the online repair according to condition may be an intermittent operation modification. As shown in Figure 2, an interval between two adjacent operation modifications may be a second set time. In this way, it can avoid the situation that the temperature of the wheel 11 is too high caused by long-time, continuous operation modifications. The above execution time of the online repair according to condition refers to the duration of operation modifications, which does not include the interval time between two adjacent operation modifications.

Specifically, the tread modification device 12 may include a modification block, and the aforementioned operation modification may include the following steps: step S520, the modification block is controlled to contact the tread of the wheel 11 with a first set pressure for a third set time; step S521, the modification block is controlled to disengage from the tread of the wheel 11 for a fourth set time; and step S522, the step S320 and the step S321 are repeated several times. The step S520 is a pressing action, and the step S521 is a releasing action. One pressing action combined with one releasing action constitutes one operation cycle. One operation modification may include multiple operation cycles, and the number of operation cycles may be determined according to the actual situation, which may generally be set to 9-11 times, for example, it may be set to 10 times.

In the embodiment of the present disclosure, the specific values of the second set time, the third set time, the fourth set time and the first set pressure are not limited here. During implementation, technical personnel in this field can determine based on actual situations. In an exemplary embodiment, the above second set time may be 30 minutes to 40 minutes, the third set time may be 25s to 35s, the fourth set time may be 25s to 35s, the first set pressure may be 0.44MPa to 0.54MPa.

In the aforementioned solutions, after the lateral acceleration signal is obtained in step S1, step S2 of determining whether a first number of continuous peak values greater than or equal to a first set value present in the lateral acceleration signal is directly performed. However, in practical applications, there are various interference factors that may cause distortion of the data measured by the lateral acceleration sensor 13 during the operation of the railway vehicle. Hence, it is necessary to filter the lateral acceleration signals obtained in the step S1.

Based on this, between step S1 and step S2, the method may further include: step S11, the lateral acceleration signal is filtered in a specific frequency range. Thus, both the lateral acceleration signals in the above step S2 and the step S6 are the filtered lateral acceleration signals. Since the interference value can be basically filtered out after filtering, the obtained lateral acceleration signals can better reflect the tread profile of the wheel 11 of the railway vehicle.

The above specific frequency range may be set as required, and in an exemplary embodiment, the specific frequency range may be 2 Hz to 10 Hz.

Further, the method for controlling a tread profile of a railway vehicle provided by the present disclosure may further include: step S8, when the tread profile modification device 12 is in a status of a non-online repair according to condition, whether a second action condition is satisfied is determined; and step S9, the tread modification device 12 is controlled to enter a viscosity-increasing mode.

The modification mode is only one operation mode of the tread modification device 12, and the modification mode itself is an intermittent operation modification. In a case that the determination in step S2 is a negative, the determination in step S4 is a negative, or within the interval time between two adjacent operation modifications, if the second action condition is satisfied, the tread of the wheel 11 can also be subjected to a viscosity-increasing treatment.

The second action condition may specifically be braking, wheel slipping, or wheel idling. The determination methods for these three situations may refer to the conventional technology, which will not be described in detail here.

The viscosity-increasing mode may specifically be: the modification block is controlled to contact the tread of the wheel 11 with a second set pressure. The second set pressure may be lower than the above first set pressure, for example, it may be 0.25MPa to 0.35MPa.

The method provided by the present disclosure does not add too many additional equipment, and can only rely on the lateral acceleration sensors and the existing tread modification device 12 to complete the online repair according to condition for the tread profile of the railway vehicle. The structure and control process are relatively simple, which can be applied conveniently and wildly.

### Embodiment two

As shown in Figure 3, a system for controlling tread profiles of a railway vehicle is provided according to the present disclosure. The railway vehicle includes a bogie 1, the bogie 1 is connected to a wheel set, and the system includes a tread modification device 12 provided for the wheel set. The system further includes a controller 2 and a lateral acceleration sensor 13 being configured to detect a lateral acceleration signal of the wheel set. The controller 2 is configured to: control a tread modification device 12 of a corresponding wheel set to enter a modification mode in a case that a first number of continuous peak values greater than or equal to a first set value present in the lateral acceleration signal, and control the tread modification device 12 to perform an online repair according to condition on a tread profile of a wheel 11 of the corresponding wheel set in a case that the first action condition is satisfied. The controller 2 is further configured to control the tread modification device 12 of the corresponding wheel set to exit the modification mode in a case that a second number of continuous peak values less than or equal to a second set value present in the lateral acceleration signal, where the second set value is less than the first set value.

Since the method for controlling tread profiles of a railway vehicle in Embodiment 1 already has the above-mentioned technical effects, the system corresponds to the method should also have similar technical effects, which will not be repeated here.

The above-mentioned lateral acceleration sensors 13 can be directly arranged on the wheel set, or can be arranged at other positions, as long as the detected signal can reflect the change of the lateral acceleration of the wheel set.

Specifically, lateral acceleration sensors 13 are provided at the front and rear end of the bogie 1. The two lateral acceleration sensors 13 may correspond one-to-one with the two wheel sets. The correspondence relationship herein is the position correspondence. From the perspective of Figure 3, that is, the front lateral acceleration sensor 13 corresponds to the front wheel set, and the rear lateral acceleration sensor 13 corresponds to the rear wheel set.

Furthermore, a timer (not shown in the figures) may also be included. The timer may be signally connected to the controller 2 for detecting the execution time of the online repair according to condition. The controller 2 can determine whether a second number of continuous peak values less than or equal to a second set value present in the lateral acceleration signal in a case that the execution time is greater than or equal to the first set time.

By using a timer to count the execution time of the online repair according to condition, whether a second number of continuous peak values less than or equal to a second set value present in the lateral acceleration signal is determined after the execution time is greater than or equal to the first set time. In this way, it can better ensure that the railway vehicle can meet the condition that a second number of continuous peak values less than or equal to a second set value present in the lateral acceleration signal on different road sections, which can not only ensure the stability of the railway vehicle when operating on different road sections, but also facilitate the stability of control process.

Furthermore, a processor 3 may also be included. The processor 3 is signally connected to the controller 2 and the lateral acceleration sensor 13. The processor 3 is configured to filter lateral acceleration signals measured by lateral acceleration sensor 13 in a specific frequency range. The processor 3 is further configured to transmit the filtered lateral acceleration signal to the controller 2. Since the interference value can be basically filtered out after filtering, the obtained lateral acceleration signals can better reflect the tread profile of the wheel 11 of the railway vehicle.

Referring to Figure 3, it should be understood that the number of lateral acceleration sensors 13 is consistent with the number of wheel sets, where each lateral acceleration sensor corresponds one-to-one with a corresponding wheel set. Each wheel set includes two wheels 11, and each wheel 11 is configured with a tread modification device 12. Therefore, the quantity and correspondence relationship of the tread modification devices 12 and the lateral acceleration sensors 13 are clear. Since the timer is used to detect the operating time of the tread modification device 12, it may be directly integrated into each tread modification device 12. As for the controller 2 and the processor 3, the number of the two may be one. In this case, the controller 2 and the processor 3 may be signally connected to the lateral acceleration sensors 13 of each bogie of each carriage and each tread modification device 12. Alternatively, the controller 2 and the processor 3 may be correspondingly configured for each carriage. Alternatively, the controller 2 and the processor 3 may be correspondingly configured for each bogie or each wheel set. The above specific implementation options are all available.

As mentioned above, when the tread modification device 12 enters the modification mode, it does not mean that the wheel 11 is about to be modified, it also needs to meet the first action condition. It can be understood that the modification of the tread profile of wheel 11 by the tread modification device 12 is a grinding operation that requires the wheel 11 to maintain a certain speed. Therefore, the above first action condition may refer to the condition of the running speed of the railway vehicle. Specifically, in the embodiment of the present disclosure, the above first action condition may be that the running speed of the railway vehicle is greater than or equal to a set vehicle speed.

In a case that the first action condition is satisfied, the tread modification device 12 may perform an online repair according to condition on the wheel 11, and the online repair according to condition may be an intermittent operation modification. As shown in Figure 2, an interval between two adjacent operation modifications may be a second set time. In this way, it can avoid the situation that the temperature of the wheel 11 is too high caused by long-time, continuous operation modifications. The above execution time of the online repair according to condition refers to the duration of operation modifications, which does not include the interval time between two adjacent operation modifications.

Specifically, the tread modification device 12 may include a modification block, and the modification block is configured to perform pressing and releasing actions repeatedly during the operation modification. The pressing action is that the modification block contacts a tread of the wheel 11 with a first set pressure for a third set time, and the releasing action is that the modification block disengages from the tread of the wheel 11 for a fourth set time. The number of repetitions is set as needed.

Furthermore, the controller 2 is further configured to enter a viscosity-increasing mode in a case that the tread profile modification device 12 is in a status of a non-online repair according to condition and a second action condition is satisfied.

The second action condition may specifically be braking, wheel slipping, or wheel idling. The determination methods for these three situations may refer to the conventional technology, which will not be described in detail here. In the viscosity-increasing mode, the modification block is configure to contact the tread of the wheel 11 with a second set pressure, where the second set pressure is lower than the above first set pressure.

It should be pointed out that the system for controlling a tread profile of a railway vehicle provided in this embodiment corresponds to the method for controlling a tread profile of a railway vehicle provided in Embodiment one. The specific meanings and value ranges of parameters in this embodiment, such as the first set value, the second set value, the first action condition, and the second action condition have been illustrated in detail in Embodiment one, which will not be repeated in this embodiment.

### Embodiment three

A railway vehicle is provided according to the present disclosure. The railway vehicle includes the system for controlling a tread profile of a railway vehicle according to the embodiments in Embodiment two.

Since the system for controlling a tread profile of a railway vehicle in the Embodiment two already has the above technical effects, then the railway vehicle with such system should also have similar technical effects, which will not be repeated here.

## Claims

1. A method for controlling a tread profile of a railway vehicle, the railway vehicle comprising a bogie (1), the bogie (1) being connected to a wheel set, the wheel set being provided with a tread modification device (12), wherein the method comprises:
step S1, obtaining a lateral acceleration signal of the wheel set;
step S2, determining whether a first number of continuous peak values is greater than or equal to a first set value present in the lateral acceleration signal, and performing step S3 on determining that a first number of continuous peak values is greater than or equal to the first set value present in the lateral acceleration signal;
step S3, controlling a tread modification device (12) of a corresponding wheel set to enter a modification mode;
step S4, determining whether a first action condition is satisfied, and performing step S5 on determining that the first action condition is satisfied;
step S5, controlling the tread modification device (12) to perform an online repair according to condition on a tread profile of a wheel (11) of the corresponding wheel set;
step S6, determining whether a second number of continuous peak values is less than or equal to a second set value present in the lateral acceleration signal, and performing step S7 on determining that the second number of continuous peak values is less than or equal to a second set value present in the lateral acceleration signal, wherein the second set value is less than the first set value; and
step S7, controlling the tread modification device (12) of the corresponding wheel set to exit the modification mode,
**characterized in that** between step S5 and step S6, the method further comprises:
step S510, obtaining an execution time of the online repair according to condition; and
step S511, determining whether the execution time is greater than or equal to a first set time, and performing step S6 on determining that the execution time is greater than or equal to the first set time.

2. The method for controlling a tread profile of a railway vehicle according to claim 1, wherein two lateral acceleration sensors (13) are provided at a front and rear end of the bogie (1) respectively, the bogie (1) comprises two wheel sets, and the two lateral acceleration sensors (13) correspond one-to-one with the two wheel sets;
wherein step S1 further comprises:
obtaining a lateral acceleration signal measured by a lateral acceleration sensor (13) corresponding to the wheel set.

3. The method for controlling a tread profile of a railway vehicle according to claim 1,
wherein the first set time is 110 hours to 130 hours.

4. The method for controlling a tread profile of a railway vehicle according to any one of claims 1 to 3, wherein between step S1 and step S2, the method further comprises:
step S11, filtering the lateral acceleration signal in a specific frequency range;
wherein the lateral acceleration signals in step S2 and step S6 are the filtered lateral acceleration signals;
wherein the specific frequency range is 2Hz to 10Hz.

5. The method for controlling a tread profile of a railway vehicle according to any one of claims 1 to 3, wherein the first action condition is that a running speed of the railway vehicle is greater than or equal to a set vehicle speed, the online repair according to condition is an intermittent operation modification, and an interval between two adjacent operation modifications is a second set time;
wherein the tread modification device (12) comprises a modification block, and the operation modification comprises:
step S520, controlling the modification block to contact a tread of the wheel (11) with a first set pressure for a third set time;
step S521, controlling the modification block to disengage from the tread of the wheel (11) for a fourth set time; and
step S522, repeating the step S520 and the step S521 several times.

6. The method for controlling a tread profile of a railway vehicle according to claim 5, wherein:
the set vehicle speed is 75km/h to 85km/h; and/or
the second set time is 30 minutes to 40 minutes; and/or
the first set pressure is 0.44MPa to 0.54MPa; and/or
the third set time is 25s to 35s; and/or
the fourth set time is 25s to 35s.

7. The method for controlling a tread profile of a railway vehicle according to any one of claims 1 to 3, wherein the method further comprises:
step S8, determining, when the tread modification device (12) is in a status of a non-online repair according to condition, whether a second action condition is satisfied; and
step S9, controlling the tread modification device (12) to enter a viscosity-increasing mode;
wherein
the second action condition is braking, wheel slipping or wheel idling; and/or
the tread modification device (12) comprises a modification block, and the step S9 comprises: controlling the modification block to contact the tread of the wheel (11) with a second set pressure.

8. A system for controlling a tread profile of a railway vehicle, wherein the railway vehicle comprises a bogie (1), the bogie (1) is connected to a wheel set, and the system comprises a tread modification device (12) provided for the wheel set, wherein
the system further comprises a controller (2) and a lateral acceleration sensor (13) being configured to detect a lateral acceleration signal of the wheel set;
the controller (2) is configured to: control a tread modification device (12) of a corresponding wheel set to enter a modification mode in a case that a first number of continuous peak values is determined to be greater than or equal to a first set value present in the lateral acceleration signal, and control the tread modification device (12) to perform an online repair according to condition on a tread profile of a wheel (11) of the corresponding wheel set in a case that it is determined that the first action condition is satisfied; and
the controller (2) is configured to control the tread modification device (12) of the corresponding wheel set to exit the modification mode in a case that a second number of continuous peak values is determined to be less than or equal to a second set value present in the lateral acceleration signal, wherein the second set value is less than the first set value,
**characterized in that** the system further comprises a timer signally connected to the controller (2),
wherein between the tread modification device (12) being controlled to perform the online repair according to condition, and the second number of continuous peak values being determined to be less than or equal to the second set value present in the lateral acceleration signal,
the timer is configured to detect an execution time of the online repair according to condition; and
the controller (2) is configured to determine whether the execution time is greater than or equal to a first set time, and determine whether the second number of continuous peak values is less than or equal to the second set value present in the lateral acceleration signal in a case that the execution time is greater than or equal to the first set time.

9. The system for controlling a tread profile of a railway vehicle according to claim 8, wherein the bogie (1) comprises two wheel sets, two lateral acceleration sensors (13) are provided at a front and rear end of the bogie (1) respectively, and the two lateral acceleration sensors (13) correspond one-to-one with the two wheel sets.

10. The system for controlling a tread profile of a railway vehicle according to claim 8, wherein the first set time is 110 hours to 130 hours.

11. The system for controlling a tread profile of a railway vehicle according to claim 8,
wherein the system further comprises a processor (3), wherein
the processor (3) is signally connected to the controller (2) and the lateral acceleration sensor (13), and is configured to filter a lateral acceleration signal measured by the lateral acceleration sensor (13) in a specific frequency range, and transmit the filtered lateral acceleration signal to the controller (2).

12. The system for controlling a tread profile of a railway vehicle according to one of claims 8 to 11, wherein
the first action condition is that a running speed of the railway vehicle is greater than or equal to a set vehicle speed, the online repair according to condition is an intermittent operation modification, and an interval between two adjacent operation modifications is a second set time.

13. The system for controlling a tread profile of a railway vehicle according to claim 12, wherein
the tread modification device (12) comprises a modification block;
the modification block is configured to perform pressing and releasing actions repeatedly during the operation modification; and
the pressing action comprises that the modification block contacts a tread of the wheel (11) with a first set pressure for a third set time, and the releasing action comprises that the modification block disengages from the tread of the wheel (11) for a fourth set time.

14. The system for controlling a tread profile of a railway vehicle according to any one of claims 8 to 11, wherein
the controller (2) is further configured to enter a viscosity-increasing mode in a case that the tread modification device (12) is in a status of a non-online repair according to condition and a second action condition is satisfied;
wherein
the second action condition is braking, wheel slipping or wheel idling; and/or
the tread modification device (12) comprises a modification block, and the modification block is configure to contact the tread of the wheel (11) with a second set pressure in the viscosity-increasing mode.

15. A railway vehicle, comprising the system for controlling a tread profile of a railway vehicle according to any one of claims 8 to 14.

## Patentansprüche

1. Verfahren zur Steuerung eines Laufflächenprofils eines Schienenfahrzeugs, wobei das Schienenfahrzeug ein Drehgestell (1) umfasst, wobei das Drehgestell (1) mit einem Radsatz verbunden ist, wobei der Radsatz mit einer Laufflächenmodifikationsvorrichtung (12) versehen ist, wobei das Verfahren Folgendes umfasst:
Schritt S1, Erhalten eines Querbeschleunigungssignals des Radsatzes,
Schritt S2, Feststellen, ob eine erste Anzahl kontinuierlicher Spitzenwerte größer oder gleich einem in dem Querbeschleunigungssignal vorhandenen ersten Sollwert ist, und Ausführen von Schritt S3 bei der Feststellung, dass eine erste Anzahl kontinuierlicher Spitzenwerte größer oder gleich dem in dem Querbeschleunigungssignal vorhandenen ersten Sollwert ist,
Schritt S3, Ansteuern einer Laufflächenmodifikationsvorrichtung (12) eines entsprechenden Radsatzes so, dass sie in einen Modifikationsmodus eintritt,
Schritt S4, Feststellen, ob eine erste Aktionsbedingung erfüllt ist, und Ausführen von Schritt S5 bei der Feststellung, dass die erste Aktionsbedingung erfüllt ist,
Schritt S5, Ansteuern der Laufflächenmodifikationsvorrichtung (12) so, dass sie an einem Laufflächenprofil eines Rades (11) des entsprechenden Radsatzes dem Zustand entsprechend eine Online-Reparatur durchführt,
Schritt S6, Feststellen, ob eine zweite Anzahl kontinuierlicher Spitzenwerte kleiner oder gleich einem in dem Querbeschleunigungssignal vorhandenen zweiten Sollwert ist, und Ausführen von Schritt S7 bei der Feststellung, dass die zweite Anzahl kontinuierlicher Spitzenwerte kleiner oder gleich einem in dem Querbeschleunigungssignal vorhandenen zweiten Sollwert ist, wobei der zweite Sollwert kleiner als der erste Sollwert ist, und
Schritt S7, Ansteuern der Laufflächenmodifikationsvorrichtung (12) des entsprechenden Radsatzes so, dass sie den Modifikationsmodus verlässt,
**dadurch gekennzeichnet, dass** das Verfahren zwischen Schritt S5 und Schritt S6 ferner Folgendes umfasst:
Schritt S510, Erhalten einer Ausführungszeit der Online-Reparatur dem Zustand entsprechend, und
Schritt S511, Feststellen, ob die Ausführungszeit größer oder gleich einer ersten Sollzeit ist, und Durchführen von Schritt S6 bei der Feststellung, dass die Ausführungszeit größer oder gleich der ersten Sollzeit ist.

2. Verfahren zur Steuerung eines Laufflächenprofils eines Schienenfahrzeugs nach Anspruch 1, bei dem zwei Querbeschleunigungssensoren (13) an einem vorderen bzw. einem hinteren Ende des Drehgestells (1) vorgesehen sind, das Drehgestell (1) zwei Radsätze umfasst und die beiden Querbeschleunigungssensoren (13) den beiden Radsätzen eineindeutig entsprechen,
wobei Schritt S1 ferner Folgendes umfasst:
Erhalten eines Querbeschleunigungssignals, das von einem dem Radsatz entsprechenden Querbeschleunigungssensor (13) gemessen wird.

3. Verfahren zur Steuerung eines Laufflächenprofils eines Schienenfahrzeugs nach Anspruch 1,
bei dem die erste Sollzeit 110 Stunden bis 130 Stunden beträgt.

4. Verfahren zur Steuerung eines Laufflächenprofils eines Schienenfahrzeugs nach einem der Ansprüche 1 bis 3, wobei das Verfahren zwischen Schritt S1 und Schritt S2 ferner Folgendes umfasst:
Schritt S11, Filtern des Querbeschleunigungssignals in einem bestimmten Frequenzbereich,
wobei die Querbeschleunigungssignale in Schritt S2 und Schritt S6 die gefilterten Querbeschleunigungssignale sind,
wobei der bestimmte Frequenzbereich bei 2 Hz bis 10 Hz liegt.

5. Verfahren zur Steuerung eines Laufflächenprofils eines Schienenfahrzeugs nach einem der Ansprüche 1 bis 3, bei dem die erste Aktionsbedingung darin besteht, dass eine Fahrgeschwindigkeit des Schienenfahrzeugs größer oder gleich einer Fahrzeugsollgeschwindigkeit ist, die Online-Reparatur dem Zustand entsprechend eine intermittierende Betriebsmodifikation ist und ein Intervall zwischen zwei benachbarten Betriebsmodifikationen eine zweite Sollzeit ist,
wobei die Laufflächenmodifikationsvorrichtung (12) einen Modifikationsblock umfasst und die Betriebsmodifikation Folgendes umfasst:
Schritt S520, Ansteuern des Modifikationsblocks so, dass er mit einem ersten Solldruck über eine dritte Sollzeit mit einer Lauffläche des Rades (11) in Kontakt gelangt,
Schritt S521, Ansteuern des Modifikationsblocks so, dass er sich über eine vierte Sollzeit von der Lauffläche des Rades (11) löst, und
Schritt S522, mehrmaliges Wiederholen des Schrittes S520 und des Schrittes S521.

6. Verfahren zur Steuerung eines Laufflächenprofils eines Schienenfahrzeugs nach Anspruch 5, bei dem:
die Fahrzeugsollgeschwindigkeit 75 km/h bis 85 km/h beträgt und/oder
die zweite Sollzeit 30 Minuten bis 40 Minuten beträgt und/oder
der erste Solldruck 0,44 MPa bis 0,54 MPa beträgt und/oder
die dritte Sollzeit 25 s bis 35 s beträgt und/oder
die vierte Sollzeit 25 s bis 35 s beträgt.

7. Verfahren zur Steuerung eines Laufflächenprofils eines Schienenfahrzeugs nach einem der Ansprüche 1 bis 3, wobei das Verfahren ferner Folgendes umfasst:
Schritt S8, dann, wenn sich die Laufflächenmodifikationsvorrichtung (12) in einem Status einer Nicht-Online-Reparatur dem Zustand entsprechend befindet, Bestimmen, ob eine zweite Aktionsbedingung erfüllt ist, und
Schritt S9, Ansteuern der Laufflächenmodifikationsvorrichtung (12) so, dass sie in einen Viskositätserhöhungsmodus eintritt,
wobei
es sich bei der zweiten Aktionsbedingung um Bremsen, Radschlupf oder Radleerlauf handelt, und/oder
die Laufflächenmodifikationsvorrichtung (12) einen Modifikationsblock umfasst und der Schritt S9 Folgendes umfasst: Ansteuern des Modifikationsblocks so, dass er mit einem zweiten Solldruck mit der Lauffläche des Rades (11) in Kontakt gelangt.

8. System zur Steuerung eines Laufflächenprofils eines Schienenfahrzeugs, wobei das Schienenfahrzeug ein Drehgestell (1) umfasst, das Drehgestell (1) mit einem Radsatz verbunden ist und das System eine für den Radsatz vorgesehene Laufflächenmodifikationsvorrichtung (12) umfasst, wobei
das System ferner eine Steuerung (2) und einen Querbeschleunigungssensor (13) umfasst, der so eingerichtet ist, dass er ein Querbeschleunigungssignal des Radsatzes erfasst,
die Steuerung (2) so eingerichtet ist, dass sie: eine Laufflächenmodifikationsvorrichtung (12) eines entsprechenden Radsatzes so ansteuert, dass diese in einem Fall, in dem festgestellt wird, dass eine erste Anzahl kontinuierlicher Spitzenwerte größer oder gleich einem in dem Querbeschleunigungssignal vorhandenen ersten Sollwert ist, in einen Modifikationsmodus eintritt, und die Laufflächenmodifikationsvorrichtung (12) so ansteuert, dass diese in einem Fall, in dem festgestellt wird, dass die erste Aktionsbedingung erfüllt ist, an einem Laufflächenprofil eines Rades (11) des entsprechenden Radsatzes eine Online-Reparatur dem Zustand entsprechend durchführt, und
die Steuerung (2) so eingerichtet ist, dass sie die Laufflächenmodifikationsvorrichtung (12) des entsprechenden Radsatzes so ansteuert, dass diese in einem Fall, in dem festgestellt wird, dass eine zweite Anzahl kontinuierlicher Spitzenwerte kleiner oder gleich einem in dem Querbeschleunigungssignal vorhandenen zweiten Sollwert ist, den Modifikationsmodus verlässt, wobei der zweite Sollwert kleiner als der erste Sollwert ist,
**dadurch gekennzeichnet, dass** das System ferner einen Zeitgeber umfasst, der signaltechnisch mit der Steuerung (2) verbunden ist,
wobei zwischen der Ansteuerung der Laufflächenmodifikationsvorrichtung (12) derart, dass sie die Online-Reparatur dem Zustand entsprechend durchführt, und der Feststellung, dass die zweite Anzahl kontinuierlicher Spitzenwerte kleiner oder gleich dem in dem Querbeschleunigungssignal vorhandenen zweiten Sollwert ist,
der Zeitgeber so eingerichtet ist, dass er eine Ausführungszeit der Online-Reparatur dem Zustand entsprechend erfasst, und
die Steuerung (2) so eingerichtet ist, dass sie feststellt, ob die Ausführungszeit größer oder gleich einer ersten Sollzeit ist, und in einem Fall, in dem die Ausführungszeit größer oder gleich der ersten Sollzeit ist, feststellt, ob die zweite Anzahl kontinuierlicher Spitzenwerte kleiner oder gleich dem in dem Querbeschleunigungssignal vorhandenen zweiten Sollwert ist.

9. System zur Steuerung eines Laufflächenprofils eines Schienenfahrzeugs nach Anspruch 8, bei dem das Drehgestell (1) zwei Radsätze umfasst, zwei Querbeschleunigungssensoren (13) an einem vorderen bzw. einem hinteren Ende des Drehgestells (1) vorgesehen sind und die beiden Querbeschleunigungssensoren (13) eineindeutig den beiden Radsätzen entsprechen.

10. System zur Steuerung eines Laufflächenprofils eines Schienenfahrzeugs nach Anspruch 8, bei dem die erste Sollzeit 110 Stunden bis 130 Stunden beträgt.

11. System zur Steuerung eines Laufflächenprofils eines Schienenfahrzeugs nach Anspruch 8,
bei dem das System ferner einen Prozessor (3) umfasst, wobei
der Prozessor (3) signaltechnisch mit der Steuerung (2) und dem Querbeschleunigungssensor (13) verbunden und so eingerichtet ist, dass er ein vom Querbeschleunigungssensor (13) gemessenes Querbeschleunigungssignal in einem bestimmten Frequenzbereich filtert und das gefilterte Querbeschleunigungssignal an die Steuerung (2) überträgt.

12. System zur Steuerung eines Laufflächenprofils eines Schienenfahrzeugs nach einem der Ansprüche 8 bis 11, bei dem
die erste Aktionsbedingung darin besteht, dass eine Fahrgeschwindigkeit des Schienenfahrzeugs größer oder gleich einer Fahrzeugsollgeschwindigkeit ist, die Online-Reparatur dem Zustand entsprechend eine intermittierende Betriebsmodifikation ist und ein Intervall zwischen zwei benachbarten Betriebsmodifikationen eine zweite Sollzeit ist.

13. System zur Steuerung eines Laufflächenprofils eines Schienenfahrzeugs nach Anspruch 12, bei dem
die Laufflächenmodifikationsvorrichtung (12) einen Modifikationsblock umfasst,
der Modifikationsblock so eingerichtet ist, dass er während der Betriebsmodifikation wiederholt Press- und Lösevorgänge durchführt, und
der Pressvorgang umfasst, dass der Modifikationsblock mit einem ersten Solldruck über eine dritte Sollzeit mit einer Lauffläche des Rades (11) in Kontakt gelangt, und der Lösevorgang umfasst, dass der Modifikationsblock sich über eine vierte Sollzeit von der Lauffläche des Rades (11) löst.

14. System zur Steuerung eines Laufflächenprofils eines Schienenfahrzeugs nach einem der Ansprüche 8 bis 11, bei dem
die Steuerung (2) ferner so eingerichtet ist, dass sie in einem Fall, in dem sich die Laufflächenmodifikationsvorrichtung (12) in einem Status einer Nicht-Online-Reparatur dem Zustand entsprechend befindet und eine zweite Aktionsbedingung erfüllt ist, in einen Viskositätserhöhungsmodus eintritt,
wobei
es sich bei der zweiten Aktionsbedingung um Bremsen, Radschlupf oder Radleerlauf handelt, und/oder
die Laufflächenmodifikationsvorrichtung (12) einen Modifikationsblock umfasst und der Modifikationsblock so eingerichtet ist, dass er im Viskositätserhöhungsmodus mit einem zweiten Solldruck mit der Lauffläche des Rades (11) in Kontakt gelangt.

15. Schienenfahrzeug, das das System zur Steuerung eines Laufflächenprofils eines Schienenfahrzeugs nach einem der Ansprüche 8 bis 14 umfasst.

## Revendications

1. Procédé de commande d'un profil de bande de roulement d'un véhicule ferroviaire, le véhicule ferroviaire comprenant un bogie (1), le bogie (1) étant relié à un essieu, l'essieu étant pourvu d'un dispositif (12) de modification de bande de roulement, le procédé comprenant :
une étape S1, l'obtention d'un signal d'accélération latérale de l'essieu,
une étape S2, la détermination si un premier nombre de valeurs de crête continues est supérieur ou égal à une première valeur définie présente dans le signal d'accélération latérale, et l'exécution de l'étape S3 lorsqu'il est déterminé que le premier nombre de valeurs de crête continues est supérieur ou égal à la première valeur définie présente dans le signal d'accélération latérale,
une étape S3, la commande d'un dispositif (12) de modification de bande de roulement d'un essieu correspondant de manière à entrer dans un mode de modification,
une étape S4, la détermination si une première condition d'action est satisfaite, et l'exécution de l'étape S5 lorsqu'il est déterminé que la première condition d'action est satisfaite,
une étape S5, la commande du dispositif (12) de modification de bande de roulement de manière à réaliser une réparation en ligne en fonction de l'état d'un profil de bande de roulement d'une roue (11) de l'essieu correspondant,
une étape S6, la détermination si un deuxième nombre de valeurs de crête continues est inférieur ou égal à une deuxième valeur définie présente dans le signal d'accélération latérale, et l'exécution de l'étape S7 lorsqu'il est déterminé que le deuxième nombre de valeurs de crête continues est inférieur ou égal à une deuxième valeur définie présente dans le signal d'accélération latérale, la deuxième valeur définie étant inférieure à la première valeur définie, et
une étape S7, la commande du dispositif (12) de modification de bande de roulement de l'essieu correspondant de manière à sortir du mode de modification,
**caractérisé en ce qu'**entre l'étape S5 et l'étape S6, le procédé comprend en outre :
une étape S510, l'obtention d'un temps d'exécution de la réparation en ligne en fonction de la condition, et
une étape S511, la détermination si le temps d'exécution est supérieur ou égal à un premier temps défini, et l'exécution de l'étape S6 lorsqu'il est déterminé que le temps d'exécution est supérieur ou égal au premier temps défini.

2. Procédé de commande d'un profil de bande de roulement d'un véhicule ferroviaire selon la revendication 1, dans lequel il est prévu deux capteurs d'accélération latérale (13) à une extrémité avant et à une extrémité arrière, respectivement, du bogie (1), le bogie (1) comprend deux essieux, et les deux capteurs d'accélération latérale (13) correspondent de manière biunivoque aux deux essieux,
l'étape S1 comprenant en outre :
l'obtention d'un signal d'accélération latérale mesuré par un capteur d'accélération latérale (13) correspondant à l'essieu.

3. Procédé de commande d'un profil de bande de roulement d'un véhicule ferroviaire selon la revendication 1, dans lequel le premier temps défini est compris entre 110 heures et 130 heures.

4. Procédé de commande d'un profil de bande de roulement d'un véhicule ferroviaire selon l'une des revendications 1 à 3, dans lequel entre l'étape S1 et l'étape S2, le procédé comprend en outre :
une étape S11, le filtrage du signal d'accélération latérale dans une plage de fréquences spécifique,
les signaux d'accélération latérale à l'étape S2 et l'étape S6 étant les signaux d'accélération latérale filtrés,
la plage de fréquences spécifique étant comprise entre 2 Hz et 10 Hz.

5. Procédé de commande d'un profil de bande de roulement d'un véhicule ferroviaire selon l'une des revendications 1 à 3, dans lequel la première condition d'action est le fait que la vitesse de marche du véhicule ferroviaire est supérieure ou égale à une vitesse de véhicule définie, la réparation en ligne selon la condition est une modification intermittente du fonctionnement, et un intervalle entre deux modifications voisines du fonctionnement est un deuxième temps défini,
le dispositif (12) de modification de bande de roulement comprenant un bloc de modification, et la modification de fonctionnement comprenant :
une étape S520, la commande du bloc de modification de manière à entrer en contact avec une bande de roulement de la roue (11) avec une première pression définie pendant un troisième temps défini,
une étape S521, la commande du bloc de modification de manière à se désengager de la bande de roulement de la roue (11) pendant un quatrième temps défini, et
une étape S522, la répétition de l'étape S520 et de l'étape S521 à plusieurs reprises.

6. Procédé de commande d'un profil de bande de roulement d'un véhicule ferroviaire selon la revendication 5, dans lequel :
la vitesse de véhicule définie est comprise entre 75 km/h et 85 km/h, et/ou
le deuxième temps défini est compris entre 30 minutes et 40 minutes, et/ou
la première pression définie est comprise entre 0,44 MPa et 0,54 MPa, et/ou
le troisième temps défini est compris entre 25 s et 35 s, et/ou
le quatrième temps défini est compris entre 25 s et 35 s.

7. Procédé de commande d'un profil de bande de roulement d'un véhicule ferroviaire selon l'une des revendications 1 à 3, dans lequel le procédé comprend en outre :
une étape S8, la détermination, lorsque le dispositif (12) de modification de bande de roulement est dans un état de réparation hors ligne selon la condition, si une deuxième condition d'action est satisfaite, et
une étape S9, la commande du dispositif (12) de modification de bande de roulement de manière à entrer dans un mode d'augmentation de viscosité,
la deuxième condition d'action étant un freinage, un patinage des roues ou un ralenti des roues, et/ou
le dispositif (12) de modification de bande de roulement comprenant un bloc de modification, et l'étape S9 comprenant : la commande du bloc de modification de manière à entrer en contact avec la bande de roulement de la roue (11) avec une deuxième pression définie.

8. Système de commande d'un profil de bande de roulement d'un véhicule ferroviaire, dans lequel le véhicule ferroviaire comprend un bogie (1), le bogie (1) est relié à un essieu, et le système comprend un dispositif (12) de modification de bande de roulement prévu pour l'essieu, dans lequel
le système comprend en outre un contrôleur (2) et un capteur d'accélération latérale (13) réalisé de manière à détecter un signal d'accélération latérale de l'essieu,
le contrôleur (2) est réalisé de manière à : commander un dispositif (12) de modification de bande de roulement d'un essieu correspondant de manière à entrer dans un mode de modification dans le cas où un premier nombre de valeurs de crête continues est déterminé comme étant supérieur ou égal à une première valeur définie présente dans le signal d'accélération latérale, et à commander le dispositif (12) de modification de bande de roulement de manière à effectuer une réparation en ligne en fonction d'une condition d'un profil de bande de roulement d'une roue (11) de l'essieu correspondant dans le cas où il est déterminé que la première condition d'action est satisfaite, et
le contrôleur (2) est réalisé de manière à commander le dispositif (12) de modification de bande de roulement de l'essieu correspondant de manière à quitter le mode de modification dans le cas où un deuxième nombre de valeurs de crête continues est déterminé comme étant inférieur ou égal à une deuxième valeur définie présente dans le signal d'accélération latérale, la deuxième valeur définie étant inférieure à la première valeur définie,
**caractérisé en ce que** le système comprend en outre une minuterie reliée au contrôleur (2) en termes de signalement,
dans lequel, entre la commande du dispositif (12) de modification de bande de roulement de manière à effectuer la réparation en ligne selon la condition, et la détermination du deuxième nombre de valeurs de crête continues comme étant inférieur ou égal à la deuxième valeur définie présente dans le signal d'accélération latérale,
la minuterie est réalisée de manière à détecter un temps d'exécution de la réparation en ligne selon la condition, et
le contrôleur (2) est réalisé de manière à déterminer si le temps d'exécution est supérieur ou égal à un premier temps défini, et à déterminer si le deuxième nombre de valeurs de crête continues est inférieur ou égal à la deuxième valeur définie présente dans le signal d'accélération latérale dans le cas où le temps d'exécution est supérieur ou égal au premier temps défini.

9. Système de commande d'un profil de bande de roulement d'un véhicule ferroviaire selon la revendication 8, dans lequel le bogie (1) comprend deux essieux, il est prévu deux capteurs d'accélération latérale (13) à une extrémité avant et à une extrémité arrière, respectivement, du bogie (1), et les deux capteurs d'accélération latérale (13) correspondent de manière biunivoque aux deux essieux.

10. Système de commande d'un profil de bande de roulement d'un véhicule ferroviaire selon la revendication 8, dans lequel le premier temps défini est compris entre 110 heures et 130 heures.

11. Système de commande d'un profil de bande de roulement d'un véhicule ferroviaire selon la revendication 8, dans lequel le système comprend en outre un processeur (3), dans lequel
le processeur (3) est relié au contrôleur (2) et au capteur d'accélération latérale (13) en termes de signalement, et est réalisé de manière à filtrer un signal d'accélération latérale mesuré par le capteur d'accélération latérale (13) dans une plage de fréquences spécifique, et à transmettre le signal d'accélération latérale filtré au contrôleur (2).

12. Système de commande d'un profil de bande de roulement d'un véhicule ferroviaire selon l'une des revendications 8 à 11, dans lequel
la première condition d'action est le fait que la vitesse de marche du véhicule ferroviaire est supérieure ou égale à une vitesse de véhicule définie, la réparation en ligne selon la condition est une modification intermittente du fonctionnement, et un intervalle entre deux modifications voisines du fonctionnement est un deuxième temps défini.

13. Système de commande d'un profil de bande de roulement d'un véhicule ferroviaire selon la revendication 12, dans lequel
le dispositif (12) de modification de bande de roulement comprend un bloc de modification,
le bloc de modification est réalisé de manière à effectuer des actions de pression et de relâchement de manière répétée pendant la modification de fonctionnement, et
l'action de pression comprend que le bloc de modification entre en contact avec une bande de roulement de la roue (11) avec une première pression définie pendant un troisième temps défini, et l'action de relâchement comprend que le bloc de modification se désengage de la bande de roulement de la roue (11) pendant un quatrième temps défini.

14. Système de commande d'un profil de bande de roulement d'un véhicule ferroviaire selon l'une des revendications 8 à 11, dans lequel
le contrôleur (2) est en outre réalisé de manière à entrer dans un mode d'augmentation de viscosité dans le cas où le dispositif (12) de modification de bande de roulement est dans un état de réparation hors ligne selon la condition et une deuxième condition d'action est satisfaite,
la deuxième condition d'action étant un freinage, un patinage des roues ou un ralenti des roues, et/ou
le dispositif (12) de modification de bande de roulement comprend un bloc de modification, et le bloc de modification est réalisé de manière à entrer en contact avec la bande de roulement de la roue (11) avec une deuxième pression définie dans le mode d'augmentation de viscosité.

15. Véhicule ferroviaire, comprenant le système de commande d'un profil de la bande de roulement d'un véhicule ferroviaire selon l'une des revendications 8 à 14.
